# EUROPÄISCHE PATENTSCHRIFT

(11) **EP 0 405 483 B1**
(45) Veröffentlichungstag und Bekanntmachung des Hinweises auf die Patenterteilung: **16.02.1994**
(21) Anmeldenummer: 90112223.4
(22) Anmeldetag: 27.06.1990
(51) Int. Cl.: G01N 27/404

(54) **Messzelle für den elektrochemischen Gasnachweis**
Measurement cell for the electrochemical detection of gases
Cellule de mesure pour la détection électrochimique des gaz

(30) Priorität: 30.06.1989 DE 3921528
(43) Veröffentlichungstag der Anmeldung: 02.01.1991
(73) Patentinhaber: Drägerwerk Aktiengesellschaft, 23542 Lübeck (DE)
(72) Erfinder: Matthiessen, Hans, D-2407 Bad Schwartau (DE)

(56) Entgegenhaltungen:
- EP-A- 0 307 790
- DE-A- 3 537 915
- GB-A- 2 094 005
- GB-A- 2 169 715
- US-A- 4 824 551

## Beschreibung

Die Erfindung betrifft eine Meßzelle für den elektrochemischen Nachweis von Gasproben gemäß dem Oberbegriff von Anspruch 1.

Eine derartige Meßzelle ist in der englischen Patentschrift GB-A 1 344 616 beschrieben.

Die bekannte Meßzelle besitzt einen Elektrolytraum, in welchem die Meßelektrode und die Gegenelektrode aufgenommen sind. Die Meßelektrode ist als elektrisch leitfähige Schicht auf der elektrolytseitigen Rückfläche einer Diffusionsmembran aufgebracht. Zur Umgebung hin ist die Diffusionsmembran durch eine durchlässige Schutzscheibe vor mechanischen Einflüssen geschützt. Um derartige Meßzellen über einen genügend langen Zeitraum betriebs- und meßbereit zu haben, ist es erforderlich, einen genügend großen Vorrat an Elektrolyt bereitzustellen. Da die an der Grenzfläche Elektrolyt/Meßelektrode/Gasprobe generierten Ladungsträger in dem Elektrolytvorrat zwischen Meßelektrode und Gegenelektrode diffundieren müssen, ist für eine ausreichende Ansprechzeit derartiger Meßzellen eine gute Ionenbeweglichkeit erforderlich, um damit das frühzeitige Austrocknen oder das Aufkonzentrieren des Elektrolyten zu vermeiden. Dadurch wird das Bauvolumen derartiger Meßzellen vergrößert, so daß insbesondere tragbare Meßgeräte unhandlich werden. Es ist bekannt (GB-A 2094 005), die Elektroden schichtweise möglichst nahe aneinander zu führen. Diese kompakte Elektrodenanordnung wird jedoch mit einer aufwendigen Dochtkonstruktion erkauft, die es ermöglichen soll, aus dem Elektrolytvorrat den notwendigen Elektrolyten an die Oberfläche der Meßelektrode heranzuführen.

Der vorliegenden Erfindung liegt somit die Aufgabe zugrunde, eine Meßzelle der genannten Art so zu verbessern, daß bei beachtlichem Elektrolytvorrat die Bauweise der Meßzelle wesentlich einfacher und von geringem Volumen sein kann, ohne daß die Ionenbeweglichkeit im Elektrolyten kleiner wird.

Die Lösung der Aufgabe erfolgt dadurch, daß die Gegenelektrode schichtförmig auf einem dem Elektrolyten zugewandten, für die Gasprobe und den Elektrolyten undurchlässigen Teilbereich der Schutzscheibe, elektrisch isoliert von der Meßelektrode und in ständigem Elektrolytkontakt befindlich angebracht ist, und daß allein die Diffusionsmembran mit der Meßelektrode auf einem für die Gasprobe durchlässigen Bereich der Schutzscheibe aufgetragen sind.

Der Vorteil der Erfindung liegt im wesentlichen darin, daß nunmehr sowohl die Meßelektrode als auch die Gegenelektrode in einer engen, räumlich benachbarten Anordnung angebracht sind und sich dabei in direktem Elektrolytkontakt befinden. Somit ermöglicht eine kurze Diffusionsstrecke besonders bei sehr hohen Meßgaskonzentrationen eine schnelle Ansprechzeit. Es wird durch die schichtweise Anordnung auf ein und derselben Fläche der Schutzscheibe ein geringes Bauvolumen der Meßzelle ermöglicht. Der Elektrolytvorrat kann ausgedehnt sein und verhindert auch bei längeren Betriebszeiten ein Austrocknen des Elektrolyten.

Will man die Meßzelle in einer potentiostatischen Betriebsweise arbeiten lassen, kann die dafür notwendige Referenzelektrode in gleicher Weise in unmittelbarer Nachbarschaft zu den übrigen Elektroden auf der Elektrolytseite der Schutzscheibe in Schichtform aufgebracht sein.

Beim Betrieb sowohl mit als auch ohne Referenzelektode ist die Durchlässigkeit der Schutzscheibe nur in dem Bereich gegeben, welcher der Meßelektrode gegenüberliegt. Das zu untersuchende Gas durchtritt die Schutzscheibe in ihrem durchlässigen Bereich und diffundiert durch die Membran sowie die durchlässige Meßzelle an die Kontaktfläche Elektrolyt/Meßelektrode/Gasprobe. Es kann notwendig sein, die Gasprobe elektrolytseitig in solche Komponenten katalytisch umzuwandeln, welche durch die angelegte Meßzellenspannung zu einer elektrochemischen Reaktion führen. Zu diesem Zwecke kann die Meßelektrode mit einem Katalysatorzusatz versehen sein.

Ein weiterer Vorteil besteht darin, daß die Meßzelle wegen des ständigen Elektrolytkontaktes zu der Meßelektrode in jeder beliebigen Einbaulage betrieben werden kann.

Besonders vorteilhaft ist es, die Schutzscheibe aus einem thermisch leitfähigen, elektrisch isolierenden Material zu fertigen, deren durchlässiger Bereich durch die Diffusion der Gasprobe bestimmende Durchlässe festgelegt ist, und deren undurchlässiger Teilbereich zur die Gasprobe enthaltenden Umgebung hin elektrische Kontaktflächen trägt, welche zu den Elektroden durchkontaktiert sind. Durch diese Merkmale erhält man einen günstigen Temperaturausgleich für alle auf der Elektrolytseite der Schutzscheibe befindlichen Elektroden, so daß der Temperaturgang des Meßergebnisses vermindert wird. Gleichzeitig kann die Meßzelle im Diffusionsgrenzstrombereich arbeiten, wobei die Dimensionierung der Durchlässe, beispielsweise als lange und enge Diffusionskanäle ausgebildet, in Zusammenwirkung mit der Elektrodenaktivität den Diffusionsgrenzstrom bestimmen. Da das Material der Schutzscheibe elektrisch isolierend ist, ist auf einfache Weise eine Durchkontaktierung möglich, welche die elektrische Verbindung der Elektroden zur in die Umgebung weisenden Oberfläche der Schutzscheibe herstellt. Durch einfaches Anbonden von Anschlußdrähten auf die Kontaktflächen der Oberseite kann ein einfacher Abgriff der Meßsignale zu einem Auswertegerät verwirklicht werden. Eine andere Möglichkeit besteht darin, die Verbindung zu den Kontaktflächen bei der Montage der Meßzelle in ein zugehöriges Aufnahmegehäuse durch entsprechende Kontaktfahnen als Meßsignalabgriffe herzustellen. In beiden Fällen kann man auf eine Durchführung der Leitungsanschlüsse von den Elektroden durch das Meßzellengehäuse verzichten. Dies trägt zu einer wesentlichen Erhöhung der Betriebssicherheit der Meßzelle bei, da schwer zu beherrschende Kriechleckagen des Elektrolyten entlang der Drahtdurchführungen zu den Kontakten vermieden werden.

Um eine möglichst gleichmäßige Kontaktierung der Meßelektrode zu verwirklichen, ist eine beispielsweise aus Graphitvlies bestehende Kontaktmatte vorgesehen, die einerseits über die Meßelektrode zur Elektrolytseite hin gelegt und andererseits an dafür vorgesehene Meßkontakte auf dem elektrolytseitigen undurchlässigen Teilbereich geführt ist. Die Meßelektrode ist dabei sandwichartig zwischen der Diffusionsmembran und der durchlässigen Kontaktmatte eingepackt. Man vermeidet dadurch, auf der dünnen und reißempfindlichen Diffusionsmembran elektrische Kontakte für die Meßelektrode anzubringen und sorgt für einen großflächigen Kontakt.

Um die Handhabung des Elektrolyten zu verbessern, ist er zweckmäßigerweise in einem Saugkörper enthalten, der den Elektrolytraum ausfüllt und mit den Elektroden in ständigem Kontakt befindlich ist. Den einzigen Meßzellenabschluß zur Umgebung hin bildet die Schutzscheibe. Der Saugkörper kann aus einem schwammartigen Polyethylenkörper bestehen, so daß für das Meßzellengehäuse ein einfacher Aufbau gewählt werden kann, ohne daß auf besondere Dichtprobleme, die bei Flüssigkeiten auftreten, geachtet werden müßte. So können beispielsweise notwendige Entlüftungsöffnungen in den Elektrolytraum ohne zusätzliche Dichtmaßnahmen hinsichtlich einer Flüssigkeit vorgesehen sein.

Bei der Ausbildung der Schutzscheibe aus einem thermisch leitfähigen Material ist es besonders zweckmäßig, auf seiner der Umgebung zugewandten Außenfläche zumindest um den durchlässigen Bereich herum oder gar ihn überquerend ein temperaturempfindliches Element aufzubringen. Dadurch wird es möglich, die im Diffusionsbereich vorherrschende Gasprobentemperatur annähernd genau zu erfassen und einer anschließenden Meßwertkompensation hinsichtlich der Gasprobentemperatur zuzuführen. Während der Diffusion durch den durchlässigen Bereich kann davon ausgegangen werden, daß die Gasprobe mit genügender Genauigkeit die Temperatur der Dichtscheibe angenommen hat. Somit ist deren Temperatur in guter Näherung als Korrekturfaktor geeignet.

Die Dichtscheibe kann vorteilhafterweise auch als Träger für eine Vorverstärkerschaltung in Hybridtechnik benutzt werden. Dies führt zu einer weiteren Miniaturisierung der Meßzelle und vergrößert das Signal-/Rauschverhältnis.

Um die Verteilung der durch den durchlässigen Bereich diffundierenden Gasprobe auf die Fläche der Diffusionsmembran zu verbessern, ist vorgesehen, elektrolytseitig hinter den Durchlässen zur Membran hin gewandt eine poröse Gasverteilungsschicht anzuordnen. Diese wird durch die an die elektrolytseitige Oberfläche der Dichtscheibe thermisch angeschweißte Diffusionsmembran gehalten. Ein geeignetes Verfahren, die Diffusionsmembran aus beispielsweise Polytetrafluorethylen (PTFE) an eine metallische oder keramische Schutzscheibe thermisch anzuschweißen, ist in der DE-OS 23 11 096 beschrieben.

Ein Ausführungsbeispiel der Erfindung wird anhand der schematischen Darstellung gezeigt und im folgenden näher erläutert.

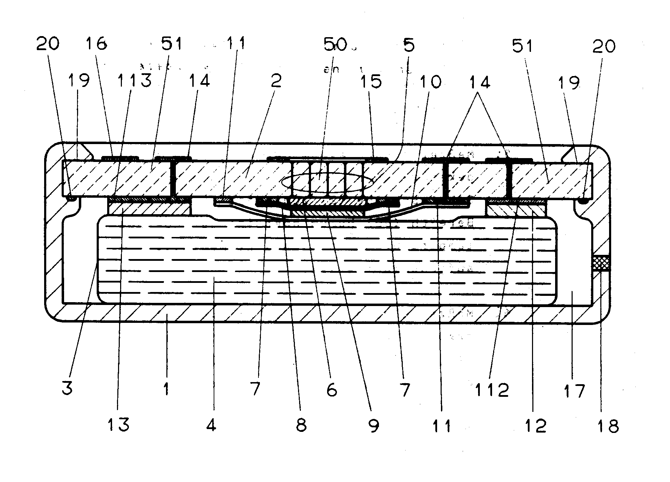

In der einzigen Figur ist eine Meßzelle im Schnitt dargestellt, wobei wegen der natürlichen Miniaturisierung der Meßzelle die dargestellte Ausführungsform nicht maßstäblich ist, sondern die Baugruppen sind der Verdeutlichung wegen überdimensional gezeichnet.

Die Meßzelle besitzt ein Gehäuse (1) aus Kunststoff, welches kreisförmig ausgebildet ist und Topfform besitzt, wobei seine Öffnung zur Umgebung hin durch eine Schutzscheibe (2) aus Keramik abgeschlossen ist. Der Innenraum des Gehäuses (1) wird im wesentlichen durch einen Saugkörper (3) aus Polyethylen ausgefüllt, in welchem der Elektrolyt (4) aufgenommen ist. Die Keramikscheibe (2) ist in der Mitte von einer Vielzahl von Durchlässen (5) durchdrungen. Sie besitzen trichterförmige Ein- und Auslässe, sind im übrigen aber als Kapillarrohre ausgebildet, welche die Diffusionsrate der aus der Umgebung in die Meßzelle eindiffundierenden Gasprobe bestimmen. Wegen ihres geringen Durchmessers sind die Durchlaßstrecken als einfache Strichlinien dargestellt. Der geometrische Ort der Durchlässe (5) bestimmt den durchlässigen Bereich (50) der Schutzscheibe (2). Der den durchlässigen Bereich (50) umgebende Teilbereich (51) am Rande der kreisförmigen Schutzscheibe (2) legt ihren undurchlässigen Teilbereich fest. Elektrolytseitig zur Schutzscheibe (2) ist hinter den Durchlässen (5) eine Gasverteilungsschicht (6) über den Auslässen der Durchlässe (5) befestigt. Diese Gasverteilungsschicht (6) überzieht eine Diffusionsmembran (8), welche an dem Schweißrand (7) befestigt ist. Die Diffusionsmembran (8) trägt die Meßelektrode (9), über welche zum Saugkörper (3) hin gerichtet eine Kontaktmatte (10) gezogen ist, welche an die Meßkontakte (11) angebonded ist. Ebenfalls zur Elektrolytseite hin ist auf der Innenfläche der Schutzscheibe (2) eine Gegenelektrode (12) und eine Referenzelektrode (13) auf ihnen zugeordnete Kontaktflächen (112, 113) aufgebracht. Sowohl die Kontaktmatte (10) als auch die Kontaktflächen (112, 113) der Gegenelektrode (12) und der Referenzelektrode (13) sind in Kontakt zu dem Saugkörper (3) gebracht. Der Meßkontakt (11) sowie die Kontaktflächen (112, 113) sind durch die Schutzscheibe (2) zu Arbeitskontakten (14) auf die der Umgebung.zugewandten Außenfläche der Schutzscheibe (2) durchkontaktiert. Auf derselben Seite der Schutzscheibe (2) zur Umgebung hin ist um die Durchlässe (5) des durchlässigen Bereiches (50) herum ein ringförmiges temperaturempfindliches Element (15) als NTC-Widerstand gelegt. Am Rande des undurchlässigen Teilbereiches (51) ist, symbolisch dargestellt, eine Verstärkerschaltung (16) in Dünnschichttechnik angebracht. An diese Verstärkerschaltung (16) werden über nicht dargestellte Leitungsverbindungen die elektrischen Signale von den Arbeitskontaktflächen (14) sowie dem temperaturempfindlichen Element (15) zugeführt und verarbeitet, bevor sie an eine ebenfalls nicht dargestellte Auswerte- und Meßeinheit weitergeleitet werden.

Das Gehäuse (1) besteht aus einem biegsamen Kunststoff, welches zum Elektrolytraum (17) mit der Umgebung durch eine Ausgleichsöffnung (18) verbunden ist. Den Abschluß des Gehäuses zur zu untersuchenden Gasatmosphäre hin bildet die Schutzscheibe (2), welche in einer umlaufenden Schnappausnehmung (19) gehalten und gegenüber dem Elektrolytraum (17) durch einen O-Ring (20) abgedichtet ist.

## Patentansprüche

1. Meßzelle für den elektrochemischen Nachweis von Gasproben, bestehend aus einem mit einem Elektrolyten gefüllten Gehäuse (1), das zur Umgebung hin von einer Schutzscheibe (2) abgeschlossen ist, die einen für die Gasprobe durchlässigen und einen für Gasprobe und den Elektrolyten undurchlassigen Teilbereich (50, 51) aufweist, wobei sich im Gehäuse zumindest eine Meßelektrode, eine Gegenelektrode und eine für die Gasprobe durchlässige und für den Elektrolyten undurchlässige Diffusionsmembran (8) befinden, wobei mindestens die Meßelektrode schichtförmig auf der dem Elektrolyten zugewandten Innenfläche der Diffusionsmembran aufgebracht ist, dadurch gekennzeichnet, daß die Gegenelektrode (12) schichtförmig auf dem dem Elektrolyten (4) zugewandten, für die Gasprobe und den Elektrolyten (4) undurchlässigen Teilbereich (51) der Schutzscheibe (2), elektrisch isoliert von der Meßelektrode (9) und in ständigem Elektrolytkontakt befindlich angebracht ist, und daß allein die Diffusionsmembran (8) mit der Meßelektrode (9) auf dem für die Gasprobe durchlässigen Bereich (50) der Schutzscheibe (2) aufgetragen sind.

2. Meßzelle nach Anspruch 1, dadurch gekennzeichnet, daß eine Referenzelektrode (13) schichtförmig auf dem undurchlässigen Teilbereich (51), elektrisch isoliert von der Meßelektrode (9) und der Gegenelektrode (12) und in Elektrolytkontakt, aufgetragen ist.

3. Meßzelle nach Anspruch 1 oder 2, dadurch gekennzeichnet, daß die Schutzscheibe (2) aus einem thermisch leitfähigen, elektrisch isolierenden Material besteht, deren durchlässiger Bereich (50) durch die Diffusion der Gasprobe bestimmende Durchlässe (5) festgelegt ist, und deren undurchlässiger Teilbereich (51) zu der die Gasprobe enthaltenden Umgebung hin elektrische Arbeitskontaktflächen (14) trägt, welche zu den Elektroden (9, 12, 13) durchkontaktiert sind.

4. Meßzelle nach Anspruch 3, dadurch gekennzeichnet, daß die Durchkontaktierung zur Meßelektrode (9) über eine Kontaktmatte (10) fortgesetzt ist, welche einerseits über die Meßelektrode (9) zur Elektrolytseite hin gelegt und andererseits an einen Meßkontakt (11) auf dem elektrolytseitigen undurchlässigen Teilbereich (51) geführt ist.

5. Meßzelle nach einem der Ansprüche 1 bis 4, dadurch gekennzeichnet, daß auf der Umgebungsseite der Schutzscheibe (2) zumindest um den durchlässigen Bereich (50) herum oder ihn gar überquerend ein temperaturempfindliches Element (15) aufgeschichtet ist.

6. Meßzelle nach einem der Ansprüche 1 bis 5, dadurch gekennzeichnet, daß der Elektrolyt (4) in einem mit den Elektroden (9, 12, 13) in Kontakt befindlichen Saugkörper (3) enthalten ist, welcher in dem Meßzellengehäuse (1) aufgenommen ist, das zur Umgebung hin durch die Schutzscheibe (2) abgeschlossen ist.

7. Meßzelle nach einem der Ansprüche 1 bis 6, dadurch gekennzeichnet, daß auf der Umgebungsseite der Schutzscheibe (2) eine Vorverstärkerschaltung (16) in Hybridtechnik zur Aufbereitung der Meßsignale vorgesehen ist.

8. Meßzelle nach einem der Ansprüche 1 bis 7, dadurch gekennzeichnet, daß elektrolytseitig hinter dem durchlässigen Bereich (50) zur Diffusionsmembran (8) hin gewandt eine poröse Gasverteilungsschicht (6) angeordnet ist.

## Claims

1. Measuring cell for the electrochemical detection of gas samples, comprising a housing (1) filled with an electrolyte, which housing is sealed towards the environment by a protective disc (2), which has a partial region (50) permeable to the gas sample and a partial region (51) impermeable to gas sample and the electrolyte, wherein in the housing there are located at least one measuring electrode, a counter electrode and a diffusion membrane (8) permeable to the gas sample and impermeable to the eleccrolyte, wherein at least the measuring electrode is disposed in a layered manner on the inner face of the diffusion membrane facing the electrolyte, characterized in that the counter electrode (12) is fitted in a layered manner on the partial region (51) of the protective disc (2), facing the electrolyte (4) and impermeable to the gas sample and the electrolyte (4), electrically insulated from the measuring electrode (9) and in constant electrolyte contact, and in that only the diffusion membrane (8) with the measuring electrode (9) is applied to the region (50) of the protective disc (2) permeable to the gas sample.

2. Measuring cell according to claim 1, characterized in that a reference electrode (13) is applied in a layered manner to the impermeable partial region (51), electrically insulated from the measuring electrode (9) and the counter electrode (12) and in electrolyte contact.

3. Measuring cell according to claim 1 or 2, characterized in that the protective disc (2) consists of a thermally conductive, electrically insulating material, the permeable region (50) of which is established by openings (5) defining the diffusion of the gas sample, and the impermeable partial region (51) of which carries electrical operating contact faces (14) towards the environment containing the gas sample, the operating contact faces being through-contacted to the electrodes (9, 12, 13).

4. Measuring cell according to claim 3, characterized in that the through-contacting to the measuring electrode (9) is continued by way of a contact mat (10), which on one side is placed over the measuring electrode (9) towards the electrolyte side and on the other side is guided to a measuring contact (11) on the impermeable partial region (51) on the side of the electrolyte.

5. Measuring cell according to one of claims 1 to 4, characterized in that a temperature-sensitive element (15) is layered on the environment side of the protective disc (2) at least around the permeable region (50) or even across it.

6. Measuring cell according to one of claims 1 to 5, characterized in that the electrolyte (4) is contained in a vacuum body (3) in contact with the electrodes (9, 12, 13), which body is incorporated in the measuring-cell housing (1) which is sealed towards the environment by the protective disc (2).

7. Measuring cell according to one of claims 1 to 6, characterized in that on the environment side of the protective disc (2) a pre-amplifier circuit (16) is provided by hybrid technology for the production of the measuring signals.

8. Measuring cell according to one of claims 1 to 7, characterized in that a porous gas-distribution layer (6) is arranged on the side of the electrolyte behind the permeable region (50) directed towards the diffusion membrane (8).

## Revendications

1. Cellule de mesure pour la détection électrochimique d'échantillons gazeux, comportant un boitier (1) rempli d'électrolyte, obturé, en direction de l'atmosphère, par une plaque de protection (2) qui présente une partie (50) perméable à l'échantillon gazeux et une partie (51) imperméable à l'échantillon gazeux et à l'électrolyte, au moins une électrode de mesure, une contre-électrode et une membrane de diffusion (8) perméable à l'échantillon gazeux et imperméable à l'électrolyte se trouvant dans le boîtier, au moins l'électrode de mesure étant disposée, sous forme de couche, sur la face intérieure, orientée vers l'électrolyte, de la membrane de diffusion, caractérisée en ce que la contre-électrode (12) est disposée, sous forme de couche, sur la partie (51) de la plaque de protection (2) orientée vers l'électrolyte (4), imperméable à l'échantillon gazeux et à l'électrolyte (4), en étant isolée électriquement de l'électrode de mesure (9) et en contact électrolytique constant et en ce que seule la membrane de diffusion (8), avec l'électrode de mesure (9), est disposée sur la partie (50) de la plaque de protection (2) qui est perméable à l'échantillon gazeux.

2. Cellule de mesure selon la revendication 1, caractérisée en ce qu'une électrode de référence (13) est placée, sous forme de couche, sur la partie (51) imperméable, est isolée électriquement de l'électrode de mesure (9) et de la contre-électrode (12) et est en contact électrolytique.

3. Cellule de mesure selon la revendication 1 ou 2, caractérisée en ce que la plaque de protection (2) est constituée en un matériau thermoconducteur, isolant électrique, dont la partie perméable (50) est définie par des passages (5) déterminant la diffusion de l'échantillon gazeux et dont la partie imperméable (51) porte des surfaces (14) de contact électrique de travail, en direction de l'atmosphère contenant l'échantillon gazeux, qui sont en contact avec les électrodes (9, 12, 13).

4. Cellule de mesure selon la revendication 3, caractérisée en ce que le contact en direction de l'électrode de mesure (9) se prolonge par un mat de contact (10) qui est posée, d'une part, sur l'électrode de mesure (9) du côté orienté vers l'électrolyte et qui est montée, d'autre part, sur un contact de mesure (11) sur la partie (51) imperméable située du côté de l'électrolyte.

5. Cellule de mesure selon l'une des revendications 1 à 4, caractérisée en ce qu'est disposé en couche, du côté de la plaque de protection (2) orienté du côté de l'atmosphère, au moins autour de la partie perméable (50) ou traversant même celle-ci, un élément thermosensible (15).

6. Cellule de mesure selon l'une des revendications 1 à 5, caractérisée en ce que l'électrolyte (4) est contenu dans un corps absorbant (3) en contact avec les électrodes (9, 12, 13), logé dans le boîtier (1) de la cellule de mesure, qui est obturé, en direction de l'atmosphère, par la plaque de protection (2).

7. Cellule de mesure selon l'une des revendications 1 à 6, caractérisée en ce qu'est prévu, du côté de la plaque de protection (2) orienté vers l'atmosphère, un montage préamplificateur (16) en technologie hybride, destiné à la mise en forme des signaux de mesure.

8. Cellule de mesure selon l'une des revendications 1 à 7, caractérisée en ce qu'une couche (6) de répartition du gaz poreuse est disposée, du côté de l'électrolyte, derrière la partie perméable (50) et est orientée en direction de la membrane de diffusion (8).
